Europäisches Patentamt

European Patent Office

Office européen des brevets

(11) Veröffentlichungsnummer: **0 358 122 B1**

(12) **EUROPÄISCHE PATENTSCHRIFT**

(45) Veröffentlichungstag der Patentschrift: **02.03.94**

(51) Int. Cl.5: **G01K 7/00**

(21) Anmeldenummer: **89116172.1**

(22) Anmeldetag: **01.09.89**

(54) **Temperatursensor.**

(30) Priorität: **08.09.88 DE 3830457**

(43) Veröffentlichungstag der Anmeldung:
**14.03.90 Patentblatt 90/11**

(45) Bekanntmachung des Hinweises auf die
Patenterteilung:
**02.03.94 Patentblatt 94/09**

(84) Benannte Vertragsstaaten:
**DE FR GB IT SE**

(56) Entgegenhaltungen:
**GB-A- 2 060 905**
**US-A- 4 592 003**

**IEEE JOURNAL OF SOLID STATE CIRCUITS,
Band SC-11, Nr. 6, Dezember 1976, Seiten
852-864; B. GILBERT: "A versatile monolithic
voltage-to-frequency convertor"**

(73) Patentinhaber: **TEMIC TELEFUNKEN microelectronic GmbH
Theresienstrasse 2
D-74072 Heilbronn(DE)**

(72) Erfinder: **Koch, Anton
Rosenstrasse 10
D-6957 Elztal/Auerbach(DE)**

(74) Vertreter: **Maute, Hans-Jürgen, Dipl.-Ing.
TEMIC TELEFUNKEN microelectronic GmbH
Postfach 35 35
D-74025 Heilbronn (DE)**

## Beschreibung

Die Erfindung betrifft einen Temperatursensor gemäß dem Oberbegriff des Anspruches 1.

Aus der DE-OS 25 22 437 ist ein solcher Temperatursensor bekannt, der monolithisch integrierbar und ein Ausgangssignal erzeugt, dessen Spannungspegel sich direkt proportional zur Temperatur verändert und direkt der absoluten Temperatur proportional ist. Dieser Temperatursensor nützt zur Anzeige der Temperatur die Temperaturempfindlichkeit der Differenz der Emitter-Basis-Spannungen zweier Transistoren aus, die bei verschiedenen Stromdichten betrieben werden. Eine solche Schaltung zweier Transistoren ist auch als "Bandgap-Schaltung" bekannt, siehe hierzu das Fachbuch "Halbleiter-Schaltungstechnik" von O. Tietze und Ch. Schenk, herausgegeben vom Springer-Verlag, 1978, 4. Auflage, insbesondere Seiten 387 bis 390 sowie Abbildung 16.30 auf Seite 390.

Das Ausgangssignal dieser Bandgap-Schaltung wird gemäß der oben genannten Druckschrift zur Verstärkung auf einen Differentialverstärker gegeben, der eine Ausgangsspannung liefert, die der absoluten Temperatur direkt proportional ist.

Ein solches Ausgangssignal wird in der Regel einer Auswertung zugeführt, wobei dies beispielsweise auf einem Mikroprozessor erfolgen kann. Damit ein Mikroprozessor die ihm zugeführten Signale verarbeiten kann, müssen sie eine bestimmte Form aufweisen, beispielsweise rechteckförmig sein. Das Ausgangssignal des bekannten Temperatursensors erfüllt diese Forderung nicht und kann deshalb nicht direkt auf einen Mikroprozessor gegeben werden, ohne zusätzlich elektronische Schaltungsmaßnahmen anwenden zu müssen.

Eine weitere wünschenswerte Eigenschaft eines Temperatursensors besteht darin, dessen Ausgangssignal so abgleichen zu können, daß es dem Kurvenverlauf einer vorgegebenen Temperaturkurve entspricht. Daher muß der Temperatursensor sowohl in der Steigung als auch in dem Absolutwert der Kurve abgleichbar sein, wobei sich die Einstellungen gegenseitig nicht beeinflussen dürfen.

Mit dem Differentialverstärker des bekannten Temperatursensors kann wohl eine Verschiebung des Pegels oder des Verstärkungsfaktors vorgenommen werden, jedoch beeinflussen sich diese Einstellungen gegenseitig. Außerdem liegt der Pegel und der Verstärkungsfaktor nach der Fertigstellung des monolithisch integrierten Temperatursensors fest, so daß im eigentlichen Sinne keine Kalibrierung mehr durchführbar ist.

Daher besteht die Aufgabe der Erfindung darin, einen Temperatursensor der eingangs genannten Art anzugeben, der ein mikroprozessor-lesbares Ausgangssignal liefert, das direkt auf einen Mikroprozessor legbar ist sowie in der Steigung als auch im Absolutwert der gewünschten Temperaturkurve unabhängig voneinander kalibrierbar ist. Diese Aufgabe wird erfindungsgemäß durch die kennzeichnenden Merkmale des Anspruches 1 gelöst.

Der erfindungsgemäße Temperatursensor erzeugt eine impulsförmige Ausgangsspannung, deren Periodendauer proportional der absoluten Temperatur in °C ist. Daher ist das Ausgangssignal BUS-fähig, das heißt, es kann direkt auf ein BUS-System gegeben werden, um in einem Mikroprozessor eine Auswertung des Signales vornehmen zu können.

Die beiden Eichelemente, die gemäß einer vorteilhaften Ausbildung der Erfindung als Dünnfilmwiderstände herstellbar sind, können, nachdem der Temperatursensor fertiggestellt ist, mittels eines Lasers abgeglichen werden. Bei einer weiteren bevorzugten Weiterbildung der Erfindung besteht daher der Temperatursensor aus einem monolithisch integrierten Schaltkreis, der mit den zusätzlichen Bauteilen, nämlich die Eichwiderstände für den Temperaturabgleich sowie der Speicherkondensator, auf einer Hybridschaltung aufgebracht ist.

Weitere vorteilhafte Weiterbildungen des erfindungsgemäßen Temperatursensor ergeben sich aus den Unteransprüchen.

Im folgenden werden die Erfindung und ihre Vorteile anhand von Ausführungsbeispielen näher erläutert. In der zugehörigen Zeichnung zeigen:

Figur 1      ein einfaches Blockschaltbild eines erfindungsgemäßen Temperatursensors,

Figur 2      ein Blockschaltbild eines weiteren erfindungsgemäßen Temperatursensors,

Figur 3      ein Schaltbild des erfindungsgemäßen Temperatursensors gemäß Figur 2,

Figur 4a      den Spannungsverlauf am Speicherkondensator C des Temperatursensors gemäß Figur 3,

Figur 4b      den Spannungsverlauf am Ausgang Q der RS-Kippstufe $F_1$ des Temperatursensors gemäß Figur 3, und

Figur 4c      den Spannungsverlauf am Ausgang des Temperatursensors gemäß Figur 3.

In den Schaltbildern sind jeweils sich entsprechende Teile mit den gleichen Bezugszeichen versehen.

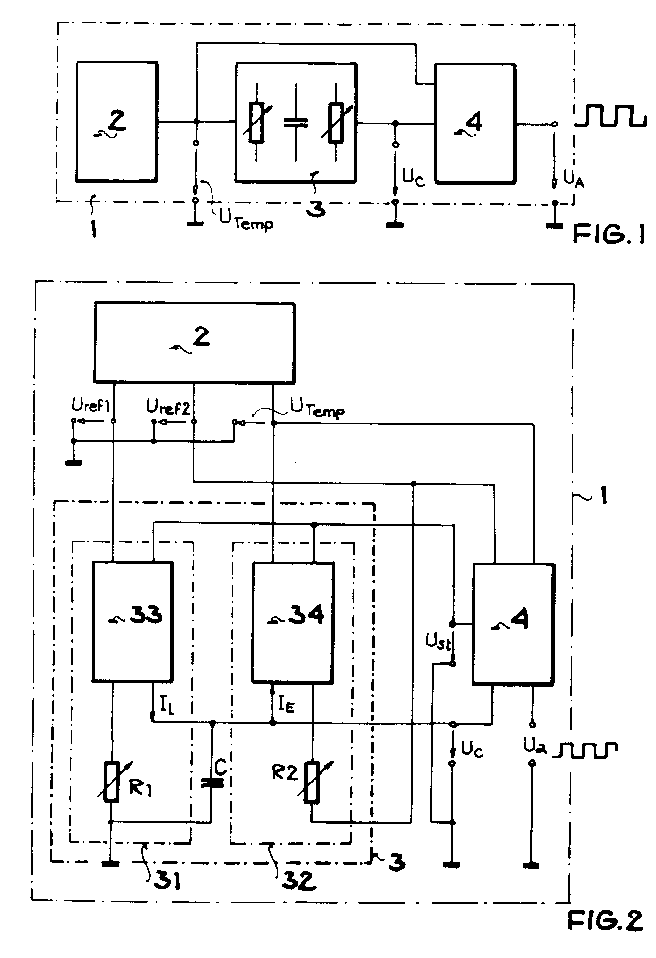

Figur 1 zeigt einen Temperatursensor 1, der aus einer Temperatur-Meßwandler-Schaltung 2, einer Speicherschaltung 3 und einer Steuerschaltung 4 aufgebaut ist. Die Temperatur-Meßwandler-Schaltung 2 liefert ein Ausgangssignal $U_{Temp}$, dessen Spannungswert proportional zur absoluten Temperatur ist. Dieses Spannungssignal wird sowohl der Speicherschaltung 3 als auch der Steuerschaltung 4 zur Durchführung einer Spannungs-Frequenz-Wandlung zugeführt, indem der Speicherkondensator der Speicherschaltung 3 in Abhängigkeit des zugeführten Spannungssignales $U_{Temp}$ aufgeladen wird, so daß die Ladezeit proportional der absoluten Temperatur ist. Die Entladezeit ist jedoch unabhängig von der Temperatur. Am Ausgang der Speicherschaltung 3 erscheint ein sägezahnförmiges Signal $U_C$, das der Steuerschaltung 4 zugeführt wird. Die Summe aus der Ladezeit und der Entladezeit des Speicherkondensators ergibt die Periodendauer des von der Steuerschaltung erzeugten rechteckförmigen Ausgangssignales. Diese Periodendauer ist der absoluten Temperatur direkt proportional. Mit zwei Eichwiderständen der Speicherschaltung 3 läßt sich jeweils die Ladezeit bzw. Entladezeit unabhängig voneinander einstellen. Da die Ladezeit proportional zum temperaturproportionalen Ausgangssignal $U_{Temp}$ der Temperatur-Meßwandler-Schaltung 2 ist, kann mit der einstellbaren Ladezeit die Steigung der Temperaturkurve abgeglichen werden. Die Entladezeit ist dagegen temperaturunabhängig, wodurch der Absolutwert der Temperaturkurve abgleichbar ist, jedoch ohne die Steigung der Temperaturkurve zu verändern.

Die Figur 2 zeigt einen Temperatursensor 1, dessen Temperatur-Meßwandler-Schaltung 2 außer dem temperaturproportionalen Spannungssignal $U_{Temp}$, eine erste und zweite temperaturstabilisierte Referenzspannung $U_{ref1}$ bzw. $U_{ref2}$ erzeugt. Die Speicherschaltung 3 ist aus der Lade-und Entladevorrichtung 31 and 32 und dem Speicherkondensator C aufgebaut, wobei die Ladevorrichtung 31 aus der Ladestromquelle 33 und dem ersten Eichwiderstand $R_1$ und die Entladevorrichtung 32 aus der Entladestromquelle 34 und dem zweiten Eichwiderstand $R_2$ besteht.

Die erste Referenzspannung $U_{ref1}$ wird der Ladestromquelle 33 zugeführt, während die zweite Referenzspannungsquelle $U_{ref2}$ mit der Auswerteschaltung 4 als auch über den zweiten Eichwiderstand $R_2$ mit der Entladestromquelle 34 verbunden ist. Der erste Eichwiderstand $R_1$ verbindet die Ladestromquelle 33 mit dem Bezugspotential. Der Speicherkondensator C ist mit seiner ersten Anschlußelektrode sowohl mit der Ladestromquelle 33 und der Entladestromquelle 34 als auch mit der Steuerschaltung 4 direkt verbunden, während die zweite Anschlußelectrode auf dem Bezugspotential liegt. Weiterhin ist sowohl die Entladestromquelle 34 als auch die Steuerschaltung 4 direkt mit der Temperatur-Meßwandler-Schaltung 2 zur Versorgung mit der temperaturproportionalen Ausgangsspannung $U_{Temp}$ verbunden. Außerdem erzeugt die Steuerschaltung 4 ein Steuersignal $U_{St}$, das sowohl der Ladestromquelle 33 als auch der Entladestromquelle 34 zugeführt ist.

Der Temperatursensor 1 gemäß dieser Figur 2 funktioniert im wesentlichen wie derjenige nach Figur 1. Die erste Referenzspannung $U_{ref1}$ dient der Ladestromquelle 33 als Bezugsspannung, die zusammen mit dem Eichwiderstand $R_1$ den Ladestrom $I_L$ bestimmt. Die zweite Referenzspannung $U_{ref2}$ erzeugt mittels des an sie angeschlossenen zweiten Eichwiderstandes $R_2$ ebenfalls eine Bezugsspannung für die Entladestromquelle 34, wobei mit dem zweiten Eichwiderstand $R_2$ der Entladestrom $I_E$ beeinflußbar ist. Ferner dient die zweite Referenzspannung auch dazu, über die Steuerschaltung 4 mittels der Steuerspannung $U_{St}$ den Entladevorgang bei der Kondensatorspannung $U_C$, die dem Wert der zweiten Referenzspannung $U_{ref2}$ entspricht, zu beenden und den Ladevorgang einzuleiten. Die zweite Referenzspannung bildet also bei dem sägezahnförmigen Spannungsverlauf $U_C$ des Speicherkondensators C den unteren Umkehrpunkt der Kurve, während der obere Umkehrpunkt die temperaturproportionale Ausgangsspannung $U_{Temp}$ der Temperatur-Meßwandler-Schaltung 2 darstellt. Das Ende des Ladevorganges und der Beginn des Entladevorganges wird ebenfalls über die von der Steuerschaltung 4 erzeugten Steuerspannung $U_{St}$ bewirkt.

Wie bei dem Temperatursensor 1 nach Figur 1 steht am Ausgang der Steuerschaltung 4 ein rechteckförmiges Ausgangssignal zu Verfügung, dessen Periodendauer der absoluten Temperatur proportional ist. Weiterhin kann auch bei diesem Temperatursensor 1 die Steigung als auch der Absolutwert der Temperaturkurve unabhängig voneinander mittels der beiden Eichwiderstände $R_1$ und $R_2$ eingestellt werden.

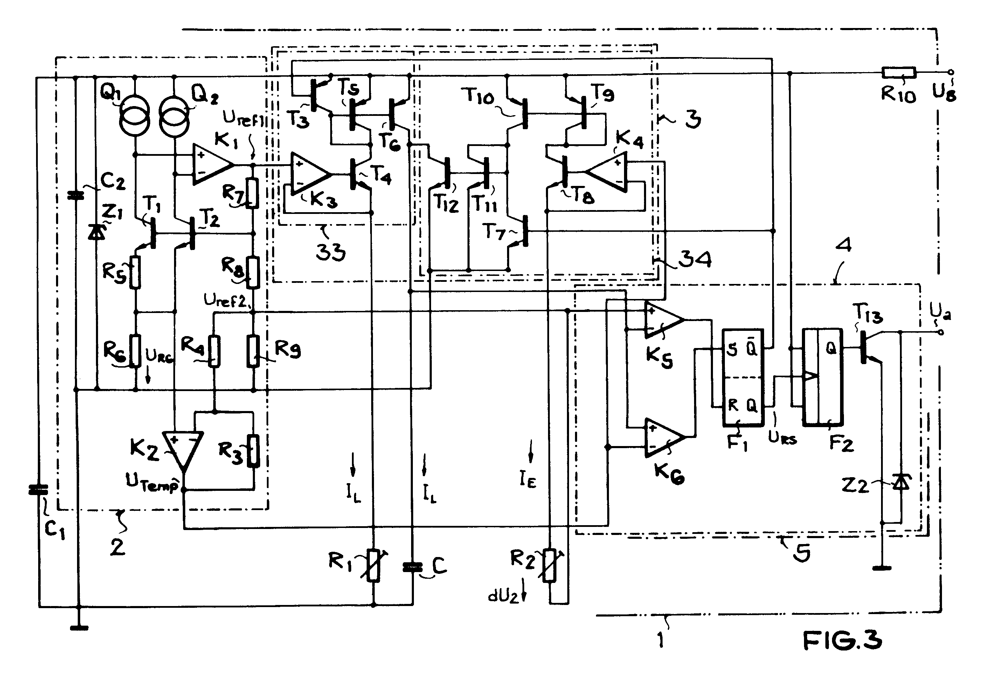

Die Figur 3 zeigt eine schaltungstechnische Ausführung eines Temperatursensors 1 gemäß der Figur 2. Die Temperatur-Meßwandler-Schaltung 2 ist hierbei als Bandgap-Schaltung mit zwei Transistoren $T_1$ und $T_2$, zwei Stromquellen $Q_1$ und $Q_2$, einem Komparator $K_1$, einem Operationsverstärker $K_2$ und Widerständen $R_3$ bis $R_9$ aufgebaut.

Die Basiselektroden der beiden Transistoren $T_1$ und $T_2$ sind miteinander verbunden, während ihre Kollektorelektroden jeweils über die Stromquellen $Q_1$ bzw. $Q_2$ an die Betriebsspannungsquelle angeschlossen und die beiden Emitterelektroden durch den Widerstand $R_5$ verbunden sind. Ein Widerstand $R_6$ verbindet die Emitterelektrode des Transistors $T_2$ mit dem Bezugspotential, wobei an diesem Widerstand $R_6$ eine temperaturproportionale Spannung $U_{R6}$ abfällt. Diese Spannung $U_{R6}$ wird dem nicht-invertierenden Eingang des Operationsverstärkers $K_2$ zugeführt. Der invertierende Eingang des Operationsverstärkers $K_2$ ist über den Widerstand $R_3$ bzw. über den Widerstand $R_4$ mit seinem Ausgang bzw. mit der zweiten Referenzspannung $U_{ref2}$ verbunden. Diese Verschaltung des Operationsverstärkers $K_2$ mit den Widerstän-

3

den $R_3$ und $R_4$ stellt einen nicht-invertierenden Verstärker dar. Der nicht-invertierende bzw. invertierende Eingang des Komparators $K_1$ ist an die Kollektorelektrode des Transistors $T_1$ bzw. $T_2$ angeschlossen, wobei sein Ausgang, der die erste Referenzspannung $U_{ref1}$ der Temperatur-Meßwandler-Schaltung 2 liefert, über den Widerstand $R_7$ mit der Basiselektrode des Transistors $T_2$ verbunden ist. Schließlich ist die Basiselektrode des Transistors $T2$ über die zwei seriell geschalteten Widerstände $R_8$ und $R_9$ mit dem Bezugspotential verbunden, wobei am Verbindungspunkt dieser beiden Widerstände $R_8$ und $R_9$ die zweite Referenzspannung $U_{ref2}$ abgreifbar ist. Eine Zener-Diode $Z_1$ und ein Kondensator $C_2$ ist jeweils zwischen der Betriebsspannungsquelle und dem Bezugspotential geschaltet, wobei die Zener-Diode $Z_1$ die Betriebsspannungsquelle stabilisiert und der Kondensator $C_2$ als EMV-Schutz dient.

Bei dieser Temperatur-Meßwandler-Schaltung 2 wird die Temperaturempfindlichkeit der Differenz der Emitter-Basis-Spannungen der beiden Transistoren $T_1$ und $T_2$ ausgenutzt, indem die beiden Transistoren $T_1$ und $T_2$ bei verschiedenen Stromdichten betrieben werden, wobei jedoch deren Kollektorströme gleich sind. Dies wird dadurch erreicht, daß der Transistor $T_1$ beispielsweise gegenüber dem Transistor $T_2$ eine um den Faktor 6 größere Emitterfläche aufweist und der Komparator $K_1$ sich so einstellt, daß sich die beiden Kollektorströme angleichen. Die Differenzspannung $U_{R5}$ der Emitter-Basis-Spannungen der beiden Transistoren $T_1$ und $T_2$ fällt an dem Widerstand $R_5$ ab:

$$U_{R5} = U_{BE2} - U_{BE1} = U_T \cdot \ln (A_1/A_2) \qquad (1)$$

mit

$$U_T = K \cdot t/e_O, \qquad (2)$$

wobei $U_{BE1}$ bzw. $U_{BE2}$ die Basis-Emitter-Spannung des Transistors $T_1$ bzw. des Transistors $T_2$, $U_T$ die Temperaturspannung, $A_1$ bzw. $A_2$ die Emitterfläche des Transistors $T_1$ bzw. des Transistors $T_2$, $K$ die Bolzmannkonstante, $e_O$ die Elementarladung und $t$ die Temperatur in Kelvin ist.

Die Spannung $U_{R6}$ an dem Widerstand $R_6$ ergibt sich aus der Summe der beiden Emitterströme der Transistoren $T_1$ und $T_2$, die bei Vernachlässigung der Basisströme näherungsweise den Kollektorströmen $I_{C1}$ bzw. $I_{C2}$ entsprechen. Es gilt daher mit Gleichung (1):

$$\begin{aligned} U_{R6} &= R_6 \cdot (I_{C1} + I_{C2}) = 2 \cdot R_6 \cdot U_{R5}/R_5 \\ &= 2 \cdot U_T \cdot (R_6/R_5) \cdot \ln (A_1/A_2) \\ &= D \cdot U_T, \qquad\qquad\qquad\qquad (3) \end{aligned}$$

wobei $D$ den Verstärkungsfaktor der Schaltung (ohne den Verstärker $K_2$) darstellt.

Mit dem Verhältnis von $A_1/A_2$ oder $R_6/R_5$ sind nun beliebige Verstärkungsfaktoren $D$ einstellbar. Für beispielsweise $D = 23$ ergibt sich für die Spannung $U_{R6}$ ein Temperaturkoeffizient $t_{koef}$ von $+\ 2$ mV/K, wobei die Änderung dieses Temperaturkoeffizienten $t_{koef}$ über der Temperatur vernachlässigbar gering ist.

Der Temperaturkoeffizient $t_{koef}$ ergibt sich aus der Ableitung von $U_{R6}$ gemäß der Gleichung (3) nach der Temperatur $t$ mit Hilfe der Gleichung (2) wie folgt:

$$\begin{aligned} t_{koef} &= dU_{R6}/dt = D \cdot dU_T/dt \\ &= D \cdot K/e_O = D \cdot U_T/t. \qquad (4) \end{aligned}$$

Mit Hilfe der Gleichung in (3) folgt aus der Gleichung (4):

$$U_{R6} = t_{koef} \cdot t. \qquad (5)$$

Die Spannung $U_{R6}$ ist somit proportional zur absoluten Temperatur in Kelvin und kann somit zur Temperaturmessung herangezogen werden.

Das Verhältnis der Emitterflächen $A_1/A_2$ der beiden Transistoren $T_1$ und $T_2$ wird so eingestellt, daß der Spannungsabfall in beiden Widerständen $R_8$ und $R_9$ 1,205 V entspricht. Dies hat zur Folge, daß der Temperaturkoeffizient dieser Spannung nahezu Null ist. Daher ist auch die erste bzw. zweite Referenzspannung $U_{ref1}$ bzw. $U_{ref2}$ temperaturstabilisiert.

Die Speicherschaltung 3 enthält den Speicherkondensator C sowie die aus dem Eichwiderstand $R_1$ bzw. $R_2$ und der Ladestromquelle 33 bzw. der Entladestromquelle 34 bestehende Ladevorrichtung bzw. Entladevorrichtung.

Die Ladestromquelle 33 ist als Stromspiegelschaltung aus Transistoren $T_4$, $T_5$ und $T_6$, einem als Ladestromschalter wirkenden Transistor $T_3$ und einem Komparator $K_3$ aufgebaut. Der nicht-invertierende bzw. invertierende Eingang des Komparators $K_3$ ist mit dem Ausgang des Komparators $K_1$ der Temperatur-Meßwandler-Schaltung 2 bzw. mit der Emitterelektrode des ersten Stromspiegeltransistors $T_4$ verbunden, dessen Basiselektrode an den Ausgang des Komparators $K_3$ angeschlossen ist. Ferner ist die Emitterelektrode des Transistors $T_4$ über den Eichwiderstand $R_1$ an das Bezugspotential angeschlossen und die Kollektorelektrode des Transistors $T_4$ ist sowohl mit der Kollektorelektrode als auch mit der Basiselektrode des zweiten Stromspiegeltransistors $T_5$ verbunden. Die Basiselektrode eines dritten Stromspiegeltransistors $T_6$ ist sowohl an die Basis des Transistors $T_5$ als auch an die Kollektorelektrode des Ladestromschalttransistors $T_3$ angeschlossen während dessen Kollektorelektrode mit der ersten Anschlußelektrode des Speicherkondensators C verbunden ist. Schließlich liegen die Emitterelektroden der Transistoren $T_3$, $T_5$ und $T_6$ auf dem Potential der Betriebsspannungsquelle. Die zweite Anschlußelektrode des Speicherkondensators C ist mit dem Bezugspotential verbunden.

Die Entladestromquelle 34 ist ebenfalls als Stromspiegelschaltung aus Transistoren $T_8$ bis $T_{12}$, einem Entladestromschalttransistor $T_7$ und einem Komparator $K_4$ aufgebaut. Der nicht-invertierende bzw. invertierende Eingang des Komparators $K_4$ ist mit dem Ausgangs des nicht-invertierenden Verstärkers $K_2$ bzw. mit der Emitterelektrode des ersten Stromspiegeltransistors $T_8$ verbunden, dessen Basiselektrode an den Ausgang dieses Komparators $K_4$ angeschlossen ist. Außerdem ist die Emitterelektrode des Stromspiegeltransistors $T_8$ über den zweiten Eichwiderstand $R_2$ mit der zweiten Referenzspannung $U_{ref2}$ verbunden. Die Kollektorelektrode des Transistors $T_8$ ist sowohl mit der Basis als auch mit dem Kollektor des zweiten Stromspiegeltransistors $T_9$ verbunden. Die Basiselektrode des dritten Stromspiegeltransistors $T_{10}$ ist mit der Basiselektrode des Transistors $T_9$ verbunden, während dessen Kollektorelektrode sowohl mit der Basiselektrode als auch mit der Kollektorelektrode eines vierten Stromspiegeltransistors $T_{11}$ verbunden ist. Die Kollektorelektrode eines fünften Stromspiegeltransistors $T_{12}$ ist an die erste Anschlußelektrode des Speicherkondensators C angeschlossen, während dessen Basiselektrode mit der Basiselektrode des Transistors $T_{11}$ als auch mit der Kollektorelektrode des Entladestromschalttransistors $T_7$ verbunden ist. Schließlich sind die Emitterelektroden der Transistoren $T_9$ und $T_{10}$ bzw. der Transistoren $T_7$, $T_{11}$ und $T_{12}$ mit der Betriebsspannungsquelle bzw. mit dem Bezugspotential verbunden.

Schließlich besteht die Steuerschaltung 4 aus Komparatoren $K_5$ und $\overline{K_5}$, einer RS-Kippstufe $F_1$, einer einflanken-getriggerten Kippschaltung $F_2$, einem Endstufentransistor $T_{13}$ sowie einer Zener-Diode $Z_2$. Der nicht-invertierende Eingang bzw. invertierende Eingang des Komparators $K_5$ ist mit der zweiten Referenzspannung $U_{ref2}$ bzw. mit der ersten Anschlußelektrode des Speicherkondensators C verbunden. Dagegen ist der nicht-invertierende bzw. der invertierende Eingang des Komparators $\overline{K_5}$ ebenfalls mit der ersten Anschlußelektrode des Speicherkondensators C bzw. mit dem Ausgang des nicht-invertierenden Verstärkers $K_2$ der Temperatur-Meßwandler-Schaltung 2 verbunden. Die Ausgänge der beiden Komparatoren $K_5$ und $\overline{K_5}$ sind jeweils mit den beiden Eingängen R bzw. S der RS-Kippschaltung $F_1$ verbunden. Der erste Ausgang Q der RS-Kippschaltung $F_1$ ist mit dem Eingang der einflanken-getriggerten Kippstufe $F_2$ verbunden, die außerdem an der Betriebsspannungsquelle anliegt. Dagegen steuert der zweite Ausgang $\overline{Q}$ sowohl die Basiselektrode des Ladestromschalttransistors $T_3$ als auch die Basiselektrode des Entladestromschalttransistors $T_7$. Schließlich steuert der Ausgang Q dieser Kippstufe $F_2$ die Basiselektrode des Endstufentransistors $T_{13}$. Die Emitterelektrode dieses Endstufentransistors $T_{13}$ liegt auf dem Bezugspotential, während dessen Kollektorelektrode den Ausgang des Temperatursensors 1 bildet, an dem die rechteckförmige Ausgangsspannung $U_a$ abgreifbar ist. Ferner ist als Schutzdiode für diesen Endstufentransistor $T_{12}$ eine Zener-Diode $Z_2$ zwischen dessen Kollektorelektrode und dem Bezugspotential geschaltet. Die bisher beschriebene Schaltung ist mit allen Elementen und Bauteilen - bis auf die beiden Eichwiderstände $R_1$ und $R_2$ sowie den Speicherkondensator C - als monolithisch integrierte Schaltung 5 ausgeführt und in der Figur 3 als punktgestrichelte Umrandung dargestellt. Diese monolithisch integrierte Schaltung 5 ist mit den anderen Bauteilen, die als Dünnfilmelemente hergestellt werden, als Hybridschaltkreis aufgebaut.

Die Umwandlung des Ausgangssignales $U_{Temp}$ des Verstärkers $K_2$, dessen Spannungswert temperaturproportional ist, in ein rechteckförmiges Ausgangssignal $U_a$, dessen Periodendauer temperaturproportional ist, erfolgt in der Speicherschaltung 3 unter Zuhilfenahme der Steuerschaltung 4.

5

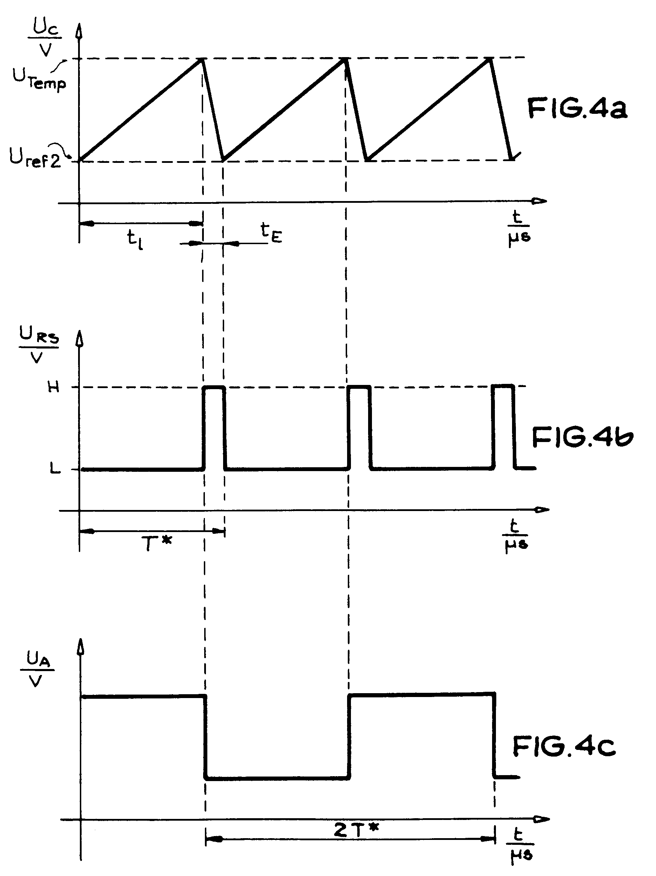

Der Komparator $K_3$ ist in dieser Speicherschaltung 3 als Impedanzwandler eingesetzt und wirkt zusammen mit dem Transistor $T_4$ als Stromtreiber, um in dem durch die Emitter-Kollektorstrecke des Transistors $T_4$ und dem Eichwiderstand $R_1$ gebildeten Stromzweig einen konstanten Ladestrom $I_L$ zu erzeugen, dessen Größe durch den Eichwiderstand $R_1$ einstellbar ist. Dieser Ladestrom $I_L$ wird mittels der als Stromspiegelschaltung ausgebildeten Ladestromquelle 33 auf den durch die Emitter-Kollektorstrecke des Transistors $T_6$ und des Speicherkondensators C gebildeten Zweiges gespiegelt. Hierdurch lädt sich der Kondensator C so lange auf, bis die Kondensatorspannung $U_C$ den Spannungswert des temperaturproportionalen Spannungssignales $U_{Temp}$ erreicht hat, wie dies auch aus der Figur 4a entnehmbar ist, die den Verlauf der Spannung $U_C$ am Speicherkondensator C zeigt. Denn dann gibt der Komparator $K_6$, der mit seinen beiden Eingängen die Kondensatorspannung $U_C$ mit der temperaturproportionalen Spannung $U_{Temp}$ vergleicht, ein H-Signal an den S-Eingang der RS-Kippstufe $F_1$ weiter, wodurch am Ausgang Q dieser Kippstufe ein H-Zustand und an dessen komplementären Ausgang $\overline{Q}$ der L-Zustand erzeugt wird. Da der Ausgang $\overline{Q}$ sowohl den Ladestromschalttransistor $T_3$ als auch den Entladestromschalttransistor $T_7$ steuert, wird hierdurch der Transistor $T_3$ geöffnet und der Transistor $T_7$ gesperrt. Nun beginnt der Entladevorgang, wobei der als Impedanzwandler eingesetzte Komparator $K_4$ mit dem Transistor $T_8$ als Stromtreiber wirkt, um in dem durch die Emitter-Kollektorstrecke des Transistors $T_8$ und dem Eichwiderstand $R_2$ gebildeten Stromzweig den Entladestrom $I_E$ zu erzeugen. Dieser Entladestrom $I_E$ wird zuerst auf die durch die Emitter-Kollektorstrecke des Transistors $T_{10}$ und des Transistors $T_{11}$ gebildeten Stromzweiges gespiegelt und anschließend auf den durch den Speicherkondensator C und der Emitter-Kollektorstrecke des Transistors $T_{12}$ gebildeten. Während des Entladevorganges erscheint am Ausgang des Komparators $K_6$ ein L-Signal, wodurch der vorherige Zustand der RS-Kippstufe jedoch erhalten bleibt. Somit bleibt auch während des gesamten Entladevorganges der Ausgang Q der RS-Kippstufe auf dem H-Pegel. Dies zeigt auch die Figur 4b, das den Spannungsverlauf des Ausganges Q darstellt.

Für die Entladezeit $t_E$ gilt:

$$t_E = C \cdot dU_2/dI \text{ mit } R_2 = dU_2/dI, \qquad (6)$$

wobei C die Kapazität des Speicherkondensators, $R_2$ der Widerstandswert des Eichwiderstandes $R_2$, $dU_2$ der Momentanwert der Spannung am Eichwiderstand $R_2$ und $dI$ der Momentanwert des Stromes durch den Eichwiderstand $R_2$ ist.

Die Spannung $dU_2$ ändert sich proportional zur Temperatur. Damit die Entladezeit $t_E$ konstant bleibt, muß sich der Entladestrom $I_E$ in Abhängigkeit von $dU_2$ so ändern, daß das Verhältnis $dU_2/dI$ konstant bleibt. Die Entladestromquelle 34 mit

$$I_E = dU_2/R_2 \qquad (7)$$

erfüllt diese Forderung. Der Entladestrom $I_E$ ändert sich in Abhängigkeit von $dU_2$, wobei

$$dU_2 = U_{Temp} - U_{ref2} \qquad (8)$$

ist, da der Komparator $K_4$ als Impedanzwandler die Spannung $U_{Temp}$ auf seinen Ausgang überträgt.

Der Entladevorgang wird durch den Komparator $K_6$ beendet, dessen Eingänge die Kondensatorspannung $U_C$ mit der zweiten Referenzspannung $U_{ref2}$ vergleicht. Sinkt die Kondensatorspannung $U_C$ unter die zweite Referenzspannung $U_{ref2}$, erzeugt der Komparator $K_6$ ein H-Signal, wodurch die RS-Kippstufe $F_1$ in den anderen Zustand zurückkippt: am Ausgang $\overline{Q}$ erscheint der H-Pegel, wodurch der Entladestromschalttransistor $T_7$ durchschaltet und der Ladestromschalttransistor $T_3$ in den sperrenden Zustand versetzt wird. Der Ausgang Q schaltet von dem H-auf den L-Pegel, entsprechend dem in der Figur 4b dargestellten $U_{RS}$-t-Diagramm. Nun beginnt von neuem der Ladestrom $I_L$ den Speicherkondensator C aufzuladen, währenddessen der Komparator $K_6$ auf der L-Zustand schaltet, das aber keine Zustandsänderung der RS-Kippstufe $F_1$ bewirkt, so daß während des gesamten Ladevorganges der Ausgang Q auf L-Pegel bleibt.

Der durch die beiden Komparatoren $K_6$ und $K_6$ sowie durch die RS-Kippstufe $F_1$ gesteuerten Lade- und Entladevorgang erzeugt somit am Speicherkondensator C einen sägezahnförmigen Spannungsverlauf, während der Ausgang Q der RS-Kippstufe $F_1$ ein rechteckförmiges Signal aufweist, dessen L-Pegel dem Ladevorgang und dessen H-Pegel dem Entladevorgang entspricht. Diese beiden Kurvenverläufe sind in den beiden Diagrammen gemäß den Figuren 4a und 4b dargestellt, wobei die Ladezeit $t_L$ genau der Zeitdauer des L-Pegels und die Entladezeit $t_E$ genau der Zeitdauer des H-Pegels am Ausgang Q entspricht.

Die Summe aus der Lade- und Entladezeit ist die Gesamtzeit T*:

$$T^* = t_L + t_E, \qquad (9)$$

wobei entsprechend Gleichung (6) für die Entladezeit $t_E$

$$t_E = C \cdot R_2 \qquad (10)$$

gilt. Für die Ladezeit $t_L$ läßt sich mit Hilfe der Gleichungen (5) und (8) sowie der folgenden Gleichung

$$U_{Temp} = A \cdot (U_{R6} - U_{ref2}) + U_{ref2}, \qquad (11)$$

wobei A der Verstärkungsfaktor des Operationsverstärkers $K_2$ ist, folgenden Zusammenhang herleiten:

$$t_L = (C \cdot A \cdot t_{koef}/I_L) \cdot (t - U_{ref2}/t_{koef}). \qquad (12)$$

Dies ist die Funktion für die Abhängigkeit der Ladezeit $t_L$ von der Temperatur t. Daraus ist erkennbar, daß die Ladezeit $t_L$ proportional der Temperatur t mit einer konstanten Steigung a:

$$a = C \cdot A \cdot t_{koef}/I_L \qquad (13)$$

und einer Verschiebung auf der Temperaturachse um x:

$$x = U_{ref2}/t_{koef} \qquad (14)$$

ist. Durch Variieren des Ladestromes $I_L$ kann die Steigung der Funktion gemäß der Gleichung (12) eingestellt werden. Dies erfolgt mit Hilfe der ersten Referenzspannung $U_{ref1}$ und des ersten Eichwiderstandes $R_1$. Da die erste Referenzspannung temperaturstabilisiert und der Temperaturkoeffizient des als Hybridwiderstandes ausgebildeten Eichwiderstandes $R_1$ nahezu Null ist, ist der Ladestrom temperaturstabilisiert und läßt sich daher durch Ändern des Wertes des Eichwiderstandes $R_1$ einstellen, wodurch die Steigung der Temperaturkurve des Temperatursensors 1 abgleichbar.

Für die Gesamtzeit $T^*$ ergibt sich aus den Gleichungen (9), (10), (11), (13) und (14) folgender Zusammenhang:

$$T^* = a \cdot (t - x) + C \cdot R_2. \qquad (15)$$

Die Steigung a ist unabhängig vom Absolutwert $C \cdot R_2$, wodurch es möglich ist, die Steigung der Temperaturkurve des Temperatursensors einzustellen, ohne daß sich der Absolutwert der Temperaturkurve ändert.

Zur Kalibrierung des Temperatursensors 1 sind daher zwei Abgleichvorgänge durchzuführen:

1. Bei einer Temperatur $t_1$ zum Einstellen des Absolutwertes durch Abgleich des Eichwiderstandes $R_2$, und

2. bei einer weiteren Temperatur $t_2$ zum Einstellen der Steigung durch Abgleich des Eichwiderstandes $R_1$.

Nach der Kalibrierung des Temperatursensors 1 an zwei Temperaturwerten ist die Periodendauer $T^*$ der Ausgangsspannung $U_a$ gemäß der Gleichung (15) proportional zur absoluten Temperatur t. Der Abgleich der beiden Eichwiderstände $R_1$ und $R_2$ erfolgt mittels eines Lasers.

Zur Erzeugung des rechteckförmigen Ausgangsignales $U_a$ wird die einflanken-getriggerte Kippschaltung $F_2$ durch den Ausgang Q der RS-Kippschaltung $F_1$ so angesteuert, daß immer die positive Flanke einen Umkippvorgang auslöst, so daß hierdurch die Periodendauer auf ein Tastverhältnis von 50 % gebracht wird, deren Periodendauer somit zweimal $T^*$ entspricht und ebenfalls der absoluten Temperatur proportional ist. Um eine größere Periodendauer zu erzeugen, muß man noch zusätzliche Teilerschaltungen an die Schaltung anschließen, bis die gewünschte Periodendauer erzeugt wird. Die Periodendauer kann auch durch andere Werte von den Eichwiderständen $R_1$ und $R_2$ abgeändert werden.

Der Temperatursensor 1 gemäß der Figur 3 ist besonders vorteilhaft im Kfz-Bereich einsetzbar, da er - wie schon oben erwähnt - als Hybridschaltkreis aufgebaut ist, wobei die Elemente in der punktgestrichelten Umrandung 5 der Figur 3 als monolithisch integrierte Schaltung ausgebildet und die Eichwiderstände $R_1$ und $R_2$ als auch der Speicherkondensator C als Dünnfilmelemente hergestellt sind. Die außerhalb der Umrandung zusätzlich dargestellten Elemente, der Widerstand $R_{10}$ und der Kondensator $C_1$ sind ebenfalls Dünnfilmelemente. Der Widerstand $R_{10}$ dient zusammen mit der Zener-Diode $Z_1$ zur Stabilisierung der

7

Betriebsspannung des Temperatursensors auf ca. 7,5 V, da die Batteriespannung $U_B$ eines Kraftfahrzeuges zwischen 9 und 16 V liegen kann, während der Kondensator $C_1$ als Pufferelement zur Eliminierung von negativen Störimpulsen dient.

Der gemäß der Figur 3 beschriebene Temperatursensor 1, der beispielsweise am Motorblock einer Brennkraftmaschine installiert wird, erzeugt ein rechteckförmiges Ausgangssignal, das sich störungsfrei und ohne jede Verfälschung der Information - nämlich der Temperatur - über längere Strecken übertragen läßt und ohne zusätzliche Elektronik direkt auf einen Mikroprozessor gelegt werden kann.

**Patentansprüche**

1. Temperatursensor (1) mit einer Temperatur-Meßwandler-Schaltung (2), die ein der absoluten Temperatur proportionales Spannungssignal ($U_{Temp}$) lieft, dadurch gekennzeichnet, daß einer Speicherschaltung (3) mit einem Speicherkondensator (C) sowie einer Steuerschaltung (4) das temperaturproportionale Spannungssignal ($U_{Temp}$) zugeführt ist, daß die Speicherschaltung (3) und die Steuerschaltung (4) derart ausgebildet sind, daß einerseits die Ladezeit ($t_L$) bzw. die Entladezeit ($t_E$) des Speicherkondensators (C) proportional zum Wert des temperaturproportionalen Spannungssignales ($U_{Temp}$) und andererseits die Entladezeit ($t_E$) bzw. die Ladezeit ($t_L$) des Speicherkondensators (C) temperaturunabhängig ist, daß in der Speicherschaltung (3) Eichelemente ($R_1$, $R_2$) zum Kalibrieren des Temperatursensors (1) vorgesehen sind, indem mittels dieser Eichelement ($R_1$, $R_2$) die Ladezeit ($t_L$) und die Entladezeit ($t_E$) jeweils unabhängig voneinander einstellbar ist, und daß die Steuerschaltung (4) in Abhängigkeit des Ladeszustandes des Speicherkondensators (C) ein impulsförmiges Ausgangssignal ($U_a$) erzeugt, dessen Periodendauer der absoluten Temperatur proportional ist.

2. Temperatursensor nach Anspruch 1, dadurch gekennzeichnet, daß die Steuerschaltung (4) ein Steuersignal ($U_{St}$) zum Steuern des Lade- und Entladevorganges des Speicherkondensators (C) an die Speicherschaltung (3) abgibt.

3. Temperatursensor nach Anspruch 1 oder 2, dadurch gekennzeichnet, daß die Steuerschaltung (4) ein rechteckförmiges Ausgangssignal ($U_a$) erzeugt.

4. Temperatursensor nach einem der vorangehenden Ansprüche, dadurch gekennzeichnet, daß die Speicherschaltung (3) eine Lade- und Entladevorrichtung (31, 32) aufweist.

5. Temperatursensor nach Anspruch 4, dadurch gekennzeichnet, daß die Ladevorrichtung (31) eine Ladestromquelle (33) enthält, die den Speicherkondensator (C) mit einem konstanten Ladestrom ($I_L$) versorgt und daß die Entladevorrichtung (32) eine Entladestromquelle (34) enthält, der aus temperaturproportionale Spannungssignal ($U_{Temp}$) zugeführt ist.

6. Temperatursensor nach einem der vorangehenden Ansprüche, dadurch gekennzeichnet, daß die Temperatur-Meßwandler-Schaltung (2) eine erste und eine zweite temperaturstabilisierte Referenzspannung ($U_{ref1}$, $U_{ref2}$) erzeugt.

7. Temperatursensor nach einem der vorangehenden Ansprüche, dadurch gekennzeichnet, daß als erstes Eichelement ($R_1$) ein abgleichbares Widerstandselement vorgesehen ist, und daß der Ladestrom ($I_L$) mittels der ersten Referenzspannung ($U_{ref1}$) und des ersten Eichelementes ($R_1$) einstellbar ist.

8. Temperatursensor nach einem der vorangehenden Ansprüche, dadurch gekennzeichnet, daß als zweites Eichelement ($R_2$) ein weiteres abgleichbares Widerstandselement vorgesehen ist, daß der Entladevorrichtung (32) über das weitere Widerstandselement ($R_2$) die zweite Referenzspannung ($U_{ref2}$) zugeführt ist, und daß mit dem weiteren Widerstandselement ($R_2$) die Entladezeit ($t_E$) einstellbar ist.

9. Temperatursensor nach einem der vorangehenden Ansprüche, dadurch gekennzeichnet, daß die Temperatur-Meßwandler-Schaltung (2) als Bandgap-Schaltung ausgebildet ist.

10. Temperatursensor nach einem der Ansprüche 5 bis 9, dadurch gekennzeichnet, daß die Ladestromquelle (33) als Stromspiegelschaltung ($T_4$, $T_5$, $T_6$) ausgebildet ist.

**11.** Temperatursensor nach einem der Ansprüche 5 bis 10, dadurch gekennzeichnet, daß ein Ladestrom-schalter ($T_3$) die Ladestromquelle (33) steuert.

**12.** Temperatursensor nach einem der Ansprüche 5 bis 11, dadurch gekennzeichnet, daß die Entladestrom-quelle (34) als Stromspiegelschaltung ($T_8$, $T_9$, $T_{10}$, $T_{11}$, $T_{12}$) ausgebildet ist.

**13.** Temperatursensor nach einem der Ansprüche 5 bis 12, dadurch gekennzeichnet, daß ein Entladestrom-schalter ($T_7$) die Entladestromquelle (34) steuert.

**14.** Temperatursensor nach einem der vorangehenden Ansprüche, dadurch gekennzeichnet, daß die Steuerschaltung (4) folgende Elemente aufweist:
a) einen ersten und zweiten Komparator ($K_5$, $K_5$) zum Detektieren des Ladezustandes des Speicherkondensators (C),
b) eine durch die Ausgänge der beiden Komparatoren ($K_5$, $K_5$) steuerbare RS-Kippschaltung ($F_1$), deren ersten Ausgang (Q) eine einflanken-getriggerte Kippschaltung ($F_2$) steuert, die das impulsför-mige Ausgangssignal ($U_a$) erzeugt, und deren zweiten Ausgang ($\overline{Q}$) sowohl den Ladestromschalter ($T_3$) als auch den Entladestromschalter ($T_7$) steuert.

**15.** Temperatursensor nach einem der Ansprüche 9 bis 14, dadurch gekennzeichnet, daß die Bandgap-Schaltung folgende Elemente aufweist:
a) einen ersten und zweiten npn-Transistor ($T_1$, $T_2$), deren Basiselektroden miteinander verbunden sind,
b) eine erste und zweite Stromquelle ($Q_1$, $Q_2$), die jeweils zwischen der Betriebsspannungsquelle ($U_B$) und der Kollektorelektrode des ersten bzw. zweiten Transistors ($T_1$, $T_2$) geschaltet ist.
c) einem Komparator ($K_1$), dessen nicht-invertierender bzw. invertierender Eingang mit der Kollektor-elektrode des ersten Transistors ($T_1$) bzw. des zweiten Transistors ($T_2$) verbunden ist und dessen Ausgang die erste Referenzspannung ($U_{ref1}$) liefert,
d) einen ersten Widerstand ($R_5$), der die beiden Emitterelektroden des ersten und zweiten Transi-stors ($T_1$, $T_2$) verbindet,
e) einen die Emitterelektrode des zweiten Transistors ($T_2$) mit dem Bezugspotential verbindenden zweiten Widerstand ($R_6$),
f) einen dritten Widerstand ($R_7$), der den Ausgang des Komparators ($K_1$) mit den Basiselektroden der beiden Transistoren ($T_1$, $T_2$) verbindet,
g) einen vierten und fünften Widerstand ($R_8$, $R_9$), die seriell geschaltet sind und die Basiselektroden der beiden Transistoren ($T_1$, $T_2$) mit dem Bezugspotential verbinden, wobei am Verbindungspunkt der beiden Widerstände ($R_8$, $R_9$) die zweite Referenzspannung ($U_{ref2}$) abgreifbar ist,
h) einem Operationsverstärker ($K_2$) zum Erzeugen des temperaturproportionalen Spannungssignales ($U_{Temp}$), wobei dessen nicht-invertierender Eingang mit der Emitterelektrode des zweiten Transistors ($T_2$) und dessen invertierender Eingang über einen sechsten Widerstand ($R_3$) mit dem Ausgang und über einen siebten Widerstand ($R_4$) mit dem Verbindungspunkt des vierten und fünften Widerstan-des ($R_8$, $R_9$) verbunden ist.

**16.** Temperatursensor nach einem der Ansprüche 4 bis 15, dadurch gekennzeichnet, daß die Ladevorrichtung (31) folgende Elemente aufweist:
a) einen Komparator ($K_3$), dessen nicht-invertierender bzw. invertierender Eingang auf dem Potential der ersten Referenzspannung ($U_{ref1}$) liegt bzw. mit der Emitterelektrode eines ersten Stromspiegel-transistors ($T_4$) und über einen ersten Eichwiderstand ($R_1$) mit dem Bezugspotential verbunden ist, und dessen Ausgang an die Basiselektrode des ersten Stromspiegeltransistors ($T_4$) angeschlossen ist,
b) einen zweiten und dritten Stromspiegeltransistor ($T_5$, $T_6$), deren Basiselektroden verbunden sind und deren Emitterelektroden an die Betriebsspannungsquelle angeschlossen sind, wobei die Basis-elektrode des zweiten Stromspiegeltransistors ($T_5$) mit dessen Kollektorelektrode sowie mit der Kollektorelektrode des ersten Stromspiegeltransistors ($T_4$) verbunden ist und die Kollektorelektrode des dritten Stromspiegeltransistors ($T_6$) an die erste Anschlußelektrode des Speicherkondensators (C) angeschlossen ist, während die zweite Anschlußelektrode des Speicherkondensators (C) auf dem Bezugspotential liegt,
c) einen Ladestromschalttransistor ($T_3$), dessen Emitterelektrode mit der Betriebsspannungsquelle und dessen Kollektorelektrode mit der Basiselektrode des zweiten Stromspiegeltransistors ($T_5$)

9

EP 0 358 122 B1

verbunden ist, während die Basiselektrode an den zweiten Ausgang ($\overline{\text{Q}}$) der RS-Kippschaltung ($F_1$) der Steuerschaltung (4) angeschlossen ist.

17. Temperatursensor nach einem der Ansprüche 4 bis 16, dadurch gekennzeichnet, daß die Entladevorrichtung (32) folgende Elemente aufweist:

a) einen Komparator ($K_4$), dessen nicht-invertierender bzw. invertierender Eingang mit dem temperaturproportionalen Spannungssignal ($U_{Temp}$) bzw. mit der Emitterelektrode eines ersten Stromspiegeltransistors ($T_8$) und über einen weiteren Eichwiderstand ($R_2$) mit der zweiten Referenzspannung ($U_{ref2}$) verbunden ist und dessen Ausgang an die Basiselektrode des ersten Stromspiegeltransistors ($T_8$) angeschlossen ist,

b) einen zweiten und dritten Stromspiegeltransistor ($T_9$, $T_{10}$), deren Basiselektroden verbunden sind und deren Emitterelektroden an die Betriebsspannungsquelle angeschlossen sind, wobei die Basiselektrode des zweiten Stromspiegeltransistors ($T_9$) mit dessen Kollektorelektrode sowie der Kollektorelektrode des ersten Stromspiegeltransistors ($T_8$) verbunden ist und die Kollektorelektrode des dritten Stromspiegeltransistors ($T_{10}$) mit der erste Basis-und Kollektorelektrode eines vierten Stromspiegeltransistors ($T_{11}$) verbunden ist, wobei dessen Basiselektrode an die Basiselektrode eines fünften Stromspiegeltransistors ($T_{12}$) angeschlossen ist, während die Emitterelektroden des vierten und fünften Stromspiegeltransistors ($T_{11}$, $T_{12}$) auf dem Bezugspotential liegen und die Kollektorelektrode des fünften Stromspiegeltransistors ($T_{12}$) an die erste Anschlußelektrode des Speicherkondensators (C) angeschlossen ist,

c) einen Entladestromschalttransistor ($T_7$), dessen Emitterelektrode auf dem Bezugspotential liegt und dessen Kollektorelektrode mit der Basiselektrode des vierten Stromspiegeltransistors ($T_{11}$) verbunden ist, während die Basiselektrode an den zweiten Ausgang ($\overline{\text{Q}}$) der RS-Kippschaltung ($F_1$) der Steuerschaltung (4) angeschlossen ist.

18. Temperatursensor nach einem der Ansprüche 14 bis 17, dadurch gekennzeichnet, daß der nicht-invertierende bzw. invertierende Eingang des ersten Komparators ($K_5$) der Steuerschaltung (4) mit der zweiten Referenzspannungsquelle ($U_{ref2}$) bzw. mit der ersten Anschlußelektrode des Speicherkondensators (C) verbunden ist, daß der nicht-invertierende bzw. invertierende Eingang des zweiten Komparators ($K_5$) der Steuerschaltung (4) mit der ersten Anschlußelektrode des Speicherkondensators (C) bzw. mit dem Ausgang des Komparators ($K_2$) der Bandgap-Schaltung verbunden ist, und daß die Steuerschaltung (4) einen Endstufentransistor ($T_{13}$) aufweist, dessen Basiselektrode mit dem Ausgang der einflanken-getriggerten Kippschaltung ($F_2$) verbunden ist, dessen Emitterelektrode auf dem Bezugspotential liegt und dessen Kollektorelektrode den Ausgang der Steuerschaltung (4) bildet.

19. Temperatursensor nach einem der vorangehenden Ansprüche, dadurch gekennzeichnet, daß der Temperatursensor(1) als Hybridschaltkreis ausgebildet ist, wobei die Temperatur-Meßwandler-Schaltung (2), die Lade- und Entladestromquelle (33, 34) sowie die Steuerschaltung (4) als monolithisch integrierte Schaltung (5), während der Speicherkondensator (C), das erste sowie das zweite Eichelement ($R_1$, $R_2$) als Dünnfilmelemente ausgeführt sind.

20. Temperatursensor nach Anspruch 19, dadurch gekennzeichnet, daß das erste sowie das zweite Eichelement ($R_1$, $R_2$) mittels eines Lasers abgleichbar ist.

**Claims**

1. A temperature sensor (1) with a temperature-transducer circuit (2) which supplies a voltage signal ($U_{Temp}$) proportional to the absolute temperature, characterised in that a storage circuit (3) with a storage capacitor (C) and a control circuit (4) is supplied with the temperature-proportional voltage signal ($U_{Temp}$), that the storage circuit (3) and the control circuit (4) are designed such that on the one hand the charging time ($t_L$) and discharging time ($t_E$) of the storage capacitor are proportional to the value of the temperature-proportional voltage signal ($T_{Temp}$) and on the other hand the discharging time ($t_E$) and charging time ($t_L$) of the storage capacitor (C) are independent of temperature, that in the storage circuit (3) calibration elements ($R_1$, $R_2$) are provided for calibrating the temperature sensor (1) in that by means of these calibration elements ($R_1$, $R_2$) the charging time ($t_L$) and the discharging time ($t_E$) are in each case adjustable independently of one another, and that in dependence upon the state of charge of the storage capacitor (C) the control circuit (4) generates a pulse-shaped output signal ($U_a$) whose period duration is proportional to the absolute temperature.

10

**2.** A temperature sensor as claimed in Claim 1, characterised in that the control circuit (4) supplies the storage circuit (3) with a control signal ($U_{St}$) for controlling the charging and discharging process of the storage capacitor (C).

**3.** A temperature sensor as claimed in Claim 1 or 2, characterised in that the control circuit (4) generates a rectangular output signal ($U_a$).

**4.** A temperature sensor as claimed in one of the preceding claims, characterised in that the storage circuit (3) comprises a charging and discharging device (31, 32).

**5.** A temperature sensor as claimed in Claim 4, characterised in that the charging device (31) contains a charging current source (33) which supplies the storage capacitor (C) with a constant charging current ($I_L$) and that the discharging device (32) contains a discharging current source (34) which is supplied with the temperature-proportional voltage signal ($U_{Temp}$).

**6.** A temperature sensor as claimed in one of the preceding claims, characterised in that the temperature-transducer circuit (2) generates a first and a second temperature-stabilised reference voltage ($U_{ref1}, U_{ref2}$).

**7.** A temperature sensor as claimed in one of the preceding claims, characterised in that an adjustable resistance element is provided as first calibration element ($R_1$) and that the charging current ($I_L$) can be adjusted by means of the first reference voltage ($U_{ref1}$) and the first calibration element ($R_1$).

**8.** A temperature sensor as claimed in one of the preceding claims, characterised in that a further adjustable resistance element is provided as second calibration element ($R_2$), that the discharging device (32) is supplied with the second reference voltage ($U_{ref2}$) via the further resistance element ($R_2$) and that the discharging time ($t_E$) can be adjusted by the further resistance element ($R_2$).

**9.** A temperature sensor as claimed in one of the preceding claims, characterised in that the temperature-transducer circuit (2) has the form of a band-gap circuit.

**10.** A temperature sensor as claimed in one of Claims 5 to 9, characterised in that the charging current source (33) has the form of a current mirror circuit ($T_4, T_5, T_6$).

**11.** A temperature sensor as claimed in one of Claims 5 to 10, characterised in that a charging current switch ($T_3$) controls the charging current source (33).

**12.** A temperature sensor as claimed in one of Claims 5 to 11, characterised in that the discharging current source (34) has the form of a current mirror circuit ($T_8, T_9, T_{10}, T_{11}, T_{12}$).

**13.** A temperature sensor as claimed in one of Claims 5 to 12, characterised in that a discharging current switch ($T_7$) controls the discharging current source (34).

**14.** A temperature sensor as claimed in one of the preceding claims, characterised in that the control circuit (4) comprises the following elements:
a) a first and a second comparator ($K_5, K_5$) for detecting the state of charge of the storage capacitor (C);
b) a RS- trigger circuit ($F_1$) which is controllable by the outputs of the two comparators ($K_5, K_5$) and whose first output (Q) controls a single-flank-triggered trigger circuit ($F_2$) which generates the pulse-shaped output signal ($U_a$) and whose second output ($\overline{Q}$) controls both the charging current switch ($T_3$) and also the discharging current switch ($T_7$).

**15.** A temperature sensor as claimed in one of Claims 9 to 14, characterised in that the band-gap circuit comprises the following elements:
a) a first and a second npn-transistor ($T_1, T_2$), the base electrodes of which are connected to one another;
b) a first and a second current source ($Q_1, Q_2$) which are in each case connected between the operating voltage source ($U_B$) and the collector electrode of the first and second transistors ($T_1, T_2$)

11

respectively;

c) a comparator ($K_1$) whose non-inverting input is connected to the collector electrode of the first transistor ($T_1$) and whose inverting input is connected to the collector electrode of the second transistor ($T_2$) and whose output supplies the first reference voltage ($U_{ref1}$);

d) a first resistors ($R_5$) which connects the two emitter electrodes of the first and second transistors ($T_1$, $T_2$);

e) a second resistor ($R_6$) which connects the emitter electrode of the second transistor ($T_2$) to the reference potential;

f) a third resistor ($R_7$) which connects the output of the comparator ($K_1$) to the base electrodes of the two transistors ($T_1$, $T_2$);

g) a fourth and a fifth resistor ($R_8$, $R_9$) which are connected in series and which connect the base electrodes of the two transistors ($T_1$, $T_2$) to the reference potential, where the second reference voltage ($U_{ref2}$) can be tapped at the connection point of the two resistors ($R_8$, $R_9$);

h) an operational amplifier ($K_2$) for the generation of the temperature-proportional voltage signal ($U_{Temp}$), where the non-inverting input of said operational amplifier is connected to the emitter electrode of the second transistor ($T_2$) and the inverting input of said operational amplifier is connected via a sixth resistor ($R_3$) to the output and via a seventh resistor ($R_4$) to the connection point of the fourth and fifth resistors ($R_8$, $R_9$).

**16.** A temperature sensor as claimed in one of Claims 4 to 15, characterised in that the charging device (31) comprises the following elements:

a) a comparator ($K_3$), the non-inverting input of which is connected to the potential of the first reference voltage ($U_{ref1}$) and the inverting input of which is connected to the emitter electrode of a first current mirror transistor ($T_4$) and via a first calibration resistor ($R_1$) to the reference potential, and the output of which is connected to the base electrode of the first current mirror transistor ($T_4$);

b) a second and a third current mirror transistor ($T_5$, $T_6$), the base electrodes of which are connected and the emitter electrodes of which are connected to the operating voltage source, where the base electrode of the second current mirror transistor ($T_5$) is connected to the collector electrode of the second current mirror transistor and to the collector electrode of the first current mirror transistor ($T_4$), and where the collector electrode of the third current mirror transistor ($T_6$) is connected to the first terminal electrode of the storage capacitor (C), while the second terminal electrode of the storage capacitor (C) is connected to the reference potential;

c) a charging current switching transistor ($T_3$), the emitter electrode of which is connected to the operating voltage source and the collector electrode of which is connected to the base electrode of the second current mirror transistor ($T_5$), while the base electrode is connected to the second output ($\overline{Q}$) of the RS- trigger circuit ($F_1$) of the control circuit (4).

**17.** A temperature sensor as claimed in one of Claims 4 to 16, characterised in that the discharging device (32) comprises the following elements:

a) a comparator ($K_4$), the non-inverting input of which is connected to the temperature-proportional voltage signal ($U_{Temp}$) and the inverting input of which is connected to the emitter electrode of a first current mirror transistor ($T_8$) and via a further calibration resistor ($R_2$) to the second reference voltage ($U_{ref2}$) and the output of which is connected to the base electrode of the first current mirror transistor ($T_8$);

b) a second and a third current mirror transistor ($T_9$, $T_{10}$), the base electrodes of which are connected and the emitter electrodes of which are connected to the operating voltage source, where the base electrode of the second current mirror transistor ($T_9$) is connected to the collector electrode of second current mirror transistor and to the collector electrode of the first current mirror transistor ($T_8$), and the collector electrode of the third current mirror transistor ($T_{10}$) is connected to the base- and collector electrode of a fourth current mirror transistor ($T_{11}$), where the base electrode of the fourth current mirror transistor ($T_{11}$) is connected to the base electrode of a fifth current mirror transistor ($T_{12}$), while the emitter electrodes of the fourth and fifth current mirror transistors ($T_{11}$, $T_{12}$) are connected to the reference potential and the collector electrode of the fifth current mirror transistor ($T_{12}$) is connected to the first terminal electrode of the storage capacitor (C);

c) a discharging current switching transistor ($T_7$), the emitter electrode of which is connected to the reference potential and the collector electrode of which is connected to the base electrode of the fourth current mirror transistor ($T_{11}$), while the base electrode is connected to the second output ($\overline{Q}$) of the RS- trigger circuit ($F_1$) of the control circuit (4).

**18.** A temperature sensor as claimed in one of Claims 14 to 17, characterised in that the non-inverting input of the first comparator ($K_5$) of the control circuit (4) is connected to the second reference voltage source ($U_{ref2}$) and the inverting input of the first comparator ($K_5$) of the control circuit (4) is connected to the first terminal electrode of the storage capacitor (C), that the non-inverting input of the second comparator ($K_5$) of the control circuit (4) is connected to the first terminal electrode of the storage capacitor (C) and the inverting input of the second comparator ($K_5$) of the control circuit (4) is connected to the output of the comparator ($K_2$) of the band-gap circuit, and that the control circuit (4) comprises an end stage transistor ($T_{13}$), the base electrode of which is connected to the output of the single-flank-triggered trigger circuit ($F_2$), the emitter electrode of which is connected to the reference potential and the collector electrode of which forms the output of the control circuit (4).

**19.** A temperature sensor as claimed in one of the preceding claims, characterised in that the temperature sensor (1) has the form of a hybrid circuit, where the temperature-transducer circuit (2), the charging- and discharging current source (33, 34) and the control circuit (4) are designed as a monolithically integrated circuit (5), while the storage capacitor (C) and the first and second calibration elements ($R_1$, $R_2$) have the form of thin-film elements.

**20.** A temperature sensor as claimed in Claim 19, characterised in that the first and second calibration elements ($R_1$, $R_2$) are adjustable by means of a laser.

**Revendications**

**1.** Capteur de température (1) avec un circuit de convertisseur de mesure de température (2), qui livre un signal de tension ($U_{Temp}$) proportionnel à la température absolue, caractérisé en ce qu'à un circuit de mémoire (3) avec un condensateur de mémoire (C) ainsi qu'un circuit de commande (4) est amené le signal de tension ($U_{Temp}$) proportionnel à la température, que le circuit de mémoire (3) et le circuit de commande (4) sont constitués de telle sorte que, d'une part, le temps de charge ($t_L$) ou bien le temps de décharge ($t_E$) du condensateur de mémoire (C) est proportionnel à la valeur du signal de tension ($U_{Temp}$) proportionnel à la température, et, d'autre part, le temps de décharge ($t_E$) ou bien le temps de charge ($t_L$) du condensateur de mémoire (C) est indépendant de la température, que dans le circuit de mémoire (3) sont prévus des éléments d'étalonnage ($R_1$, $R_2$) pour le calibrage du capteur de température (1), tandis qu'au moyen de ces éléments d'étalonnage ($R_1$, $R_2$) le temps de charge ($t_L$) et le temps de décharge ($t_E$) sont chaque fois ajustables indépendamment l'un de l'autre, et en ce que le circuit de commande (4) engendre, en fonction de l'état de charge du condensateur de mémoire (C), un signal de sortie ($U_a$) en forme d'impulsions, dont la durée de période est proportionnelle à la température absolue.

**2.** Capteur de température selon la revendication 1, caractérisé en ce que le circuit de commande (4) délivre un signal de commande ($U_{ST}$), pour la commande du processus de charge et du processus de décharge du condensateur de mémoire (C), au circuit de mémoire (3).

**3.** Capteur de température selon la revendication 1 ou la revendication 2, caractérisé en ce que le circuit de commande (4) engendre un signal de sortie ($U_a$) de forme rectangulaire.

**4.** Capteur de température selon une des revendications précédentes, caractérisé en ce que le circuit de mémoire (3) présente un dispositif de charge et un dispositif de décharge (31, 32).

**5.** Capteur de température selon la revendication 4, caractérisé en ce que le dispositif de charge (31) comprend une source de courant de charge (33), qui alimente le condensateur de mémoire (C) avec un courant de charge ($I_L$) constant, et en ce que le dispositif de décharge (32) comprend une source de courant de décharge (34), à laquelle le signal de tension ($U_{Temp}$) proportionnel à la température est amené.

**6.** Capteur de température selon une des revendications précédentes, caractérisé en ce que le circuit de convertisseur de mesure de température (2) engendre une première et une deuxième tension de référence ($U_{ref1}$, $U_{ref2}$) stabilisée en température.

EP 0 358 122 B1

**7.** Capteur de température selon l'une des revendications précédentes, caractérisé en ce que le premier élément d'étalonnage ($R_1$) est pourvu d'un élément de résistance réglable, et en ce que le circuit de charge ($I_L$) est ajustable au moyen de la première tension de référence ($U_{ref1}$) et du premier élément d'étalonnage ($R_1$).

**8.** Capteur de température selon une des revendications précédentes, caractérisé en ce qu'un autre élément de résistance réglable est prévu comme deuxième élément d'étalonnage ($R_2$), que la deuxième tension de référence ($U_{ref2}$) est amenée au dispositif de décharge (32) par l'intermédiaire de l'autre élément de résistance ($R_2$), et en ce que le temps de décharge ($t_E$) est ajustable avec l'autre élément de résistance ($R_2$).

**9.** Capteur de température selon une des revendications précédentes, caractérisé en ce que le circuit de convertisseur de mesure de température (2) est constitué comme un circuit à largeur de bande interdite.

**10.** Capteur de température selon une des revendications 5 à 9, caractérisé en ce que la source de courant de charge (33) est constituée comme un circuit d'image de courant ($T_4$, $T_5$, $T_6$).

**11.** Capteur de température selon une des revendications 5 à 10, caractérisé en ce qu'un interrupteur de courant de charge ($T_3$) commande la source de courant de charge (33).

**12.** Capteur de température selon une des revendications 5 à 11, caractérisé en ce que la source de courant de décharge (34) est constituée comme un circuit d'image de courant ($T_8$, $T_9$, $T_{10}$, $T_{11}$, $T_{12}$).

**13.** Capteur de température selon une des revendications 5 à 12, caractérisé en ce qu'un interrupteur de courant de décharge ($T_7$) commande la source de courant de décharge (34).

**14.** Capteur de température selon une des précédentes revendications, caractérisé en ce que le circuit de commande (4) présente les éléments suivants :
a) un premier et un deuxième comparateur ($K_5$, $K_5$) pour la détection de l'état de charge du condensateur de mémoire (C),
b) une bascule RS ($F_1$) commandable par les sorties des deux comparateurs ($K_5$, $K_5$), dont la première sortie (Q) commande une bascule ($F_2$) déclenchée d'un seul flanc, qui engendre le signal de sortie ($U_a$) en forme d'impulsions, et dont la deuxième sortie ($\overline{Q}$) commande aussi bien l'interrupteur de courant de charge ($T_3$) qu'aussi l'interrupteur de courant de décharge ($T_7$).

**15.** Capteur de température selon une des revendications 9 à 14, caractérisé en ce que le circuit à largeur de bande interdite présente les éléments suivants :
a) un premier et un deuxième transistor npn ($T_1$, $T_2$), dont les électrodes de base sont reliées l'une avec l'autre,
b) une première et une deuxième source de courant ($Q_1$, $Q_2$), qui, chaque fois, est mise en circuit entre la source de tension d'exploitation ($U_B$) et l'électrode de collecteur du premier ou bien du deuxième transistor ($T_1$, $T_2$).
c) un comparateur ($K_1$), dont l'entrée invertie ou non invertie est reliée avec l'électrode de collecteur du premier transistor ($T_1$) ou bien du deuxième transistor ($T_2$), et dont la sortie livre la première tension de référence ($U_{ref1}$),
d) une première résistance ($R_5$), qui relie les deux électrodes d'émetteur du premier et du deuxième transistor ($T_1$, $T_2$),
e) une deuxième résistance ($R_6$) reliant l'électrode d'émetteur du deuxième transistor ($T_2$) avec le potentiel de référence,
f) une troisième résistance ($R_7$), qui relie la sortie du comparateur ($K_1$) avec les électrodes de base des deux transistors ($T_1$, $T_2$),
g) une quatrième et une cinquième résistance ($R_8$, $R_9$), qui sont mises en circuit en série et qui relient les électrodes de base des deux transistors ($T_1$, $T_2$) avec le potentiel de base, où, au point de liaison des deux résistances ($R_8$, $R_9$), la deuxième tension de référence ($U_{ref2}$) est prélevable,
h) un amplificateur opérationnel ($K_2$), pour l'engendrement du signal de tension ($U_{Temp}$) proportionnel à la température, où l'entrée non invertie de celui-ci est reliée avec l'électrode d'émetteur du deuxième transistor ($T_2$) et l'entrée invertie de celui-ci est reliée, par l'intermédiaire d'une sixième résistance (R₃), avec la sortie et, par l'intermédiaire d'une septième résistance (R₄), avec le point de liaison des quatrième et cinquième résistances (R₈, R₉).

**16.** Capteur de température selon une des revendications 4 à 15, caractérisé en ce que le dispositif de charge (31) présente les éléments suivants :

a) un comparateur (K₃) dont l'entrée non invertie ou bien l'entrée invertie se trouve au potentiel de la première tension de référence (U_ref1) ou bien est reliée avec l'électrode d'émetteur d'un premier transistor d'image de courant (T₄) et, par l'intermédiaire d'une première résistance d'étalonnage (R₁), avec le potentiel de référence, et dont la sortie est raccordée à l'électrode de base du premier transistor d'image de courant (T₄),

b) un deuxième et un troisième transistor d'image de courant (T₅, T₆), dont les électrodes de base sont reliées et dont les électrodes d'émetteur sont raccordées à la source de tension d'exploitation, où, l'électrode de base du deuxième transistor d'image de courant (T₅) est reliée avec l'électrode de collecteur de celui-ci ainsi qu'avec l'électrode de collecteur du premier transistor d'image de courant (T₄), et l'électrode de collecteur du troisième transistor d'image de courant (T₆) est raccordée à la première électrode de raccordement du condensateur de mémoire (C), tandis que la deuxième électrode de raccordement du condensateur de mémoire (C) se trouve au potentiel de référence,

c) un transistor de mise en et hors service de courant de charge (T₃), dont l'électrode d'émetteur est reliée avec la source de tension d'exploitation et dont l'électrode de collecteur est reliée avec l'électrode de base du deuxième transistor d'image de courant (T₅), tandis que l'électrode de base est raccordée à la deuxième sortie ($\overline{Q}$) de la bascule RS (F₁) du circuit de commande (4).

**17.** Capteur de température selon une des revendications 4 à 16, caractérisé en ce que le dispositif de décharge (32) présente les éléments suivants :

a) un comparateur (K₄), dont l'entrée non invertie ou bien l'entrée invertie est reliée avec le signal de tension (U_Temp) proportionnel à la température ou bien avec l'électrode d'émetteur d'un premier transistor d'image de courant (T₈) et, par l'intermédiaire d'une autre résistance d'étalonnage (R₂), avec la deuxième tension de référence (U_ref2), et dont la sortie est raccordée à l'électrode de base du premier transistor d'image de courant (T₈),

b) un deuxième et un troisième transistor d'image de courant (T₉, T₁₀), dont les électrodes de base sont reliées et dont les électrodes d'émetteur sont raccordées à la source de tension d'exploitation, où, l'électrode de base du deuxième transistor d'image de courant (T₉) est reliée avec l'électrode de collecteur de celui-ci ainsi qu'avec l'électrode de collecteur du premier transistor d'image de courant (T₈), et l'électrode de collecteur du troisième transistor d'image de courant (T₁₀) est reliée avec l'électrode de base et l'électrode de collecteur d'un quatrième transistor d'image de courant (T₁₁), où, l'électrode de base de celui-ci est raccordée à l'électrode de base d'un cinquième transistor d'image de courant (T12), tandis que les électrodes d'émetteur du quatrième et du cinquième transistor d'image de courant (T₁₁, T₁₂) se trouvent au potentiel de référence et l'électrode de collecteur du cinquième transistor d'image de courant (T₁₂) est raccordée à la première électrode de raccordement du condensateur de mémoire (C),

c) un transistor de mise en et hors service de courant de décharge (T₇), dont l'électrode d'émetteur se trouve au potentiel de référence et dont l'électrode de collecteur est reliée avec l'électrode de base du quatrième transistor d'image de courant (T₁₁), tandis que l'électrode de base est raccordée à la deuxième sortie (Q) de la bascule RS (F₁) du circuit de commande (4).

**18.** Capteur de température selon une des revendications 14 à 17, caractérisé en ce que l'entrée non invertie ou bien l'entrée invertie du premier comparateur (K₅) du circuit de commande (4) est reliée avec la deuxième source de tension de référence (U_ref2) ou bien avec la première électrode de raccordement du condensateur de mémoire (C), que l'entrée non invertie ou bien l'entrée invertie du deuxième comparateur (K₅) du circuit de commande (4) est reliée avec la première électrode de raccordement du condensateur de mémoire (C) ou bien avec la sortie du comparateur (K₂) du circuit à largeur de bande interdite, et en ce que le circuit de commande (4) présente un transistor d'étage final (T₁₃), dont l'électrode de base est reliée avec la sortie de la bascule (F₂) déclenchée d'un seul flanc, dont l'électrode d'émetteur se trouve au potentiel de référence et dont l'électrode de collecteur forme la sortie du circuit de commande (4).

**19.** Capteur de température selon une des précédentes revendications, caractérisé en ce que le capteur de température (1) est constitué comme un circuit hybride, où, le circuit de convertisseur de mesure de température (2), la source de tension de charge et la source de tension de décharge (33, 34), ainsi que le circuit de commande (4) sont exécutés comme circuit monolithique intégré (5), tandis que le condensateur de mémoire (C), le premier élément d'étalonnage ($R_1$), ainsi que le deuxième élément d'étalonnage ($R_2$) sont exécutés comme des éléments à film fin.

20. Capteur de température selon la revendication 19, caractérisé en ce que le premier élément d'étalonnage ($R_1$) ainsi que le deuxième élément d'étalonnage ($R_2$) sont réglables au moyen d'un laser.

FIG.1

FIG.2

17

FIG.3

FIG.4a

FIG.4b

FIG.4c